# EUROPEAN PATENT APPLICATION

(11) **EP 1 547 819 A1**
(43) Date of publication of application: **29.06.2005**
(21) Application number: 03784645.8
(22) Date of filing: 11.08.2003
(51) Int. Cl.: B60C 11/04

(54) **PNEUMATIC TIRE FOR TWO-WHEELED MOTOR VEHICLE**

(30) Priority: 09.08.2002 JP 2002233091
(71) Applicant: BRIDGESTONE CORPORATION, Tokyo 104-0031 (JP)
(72) Inventor: Nakamura, Tsutomu, Bridgestone Corp. Tech. Center, Kodaira-shi, Tokyo 187-0031 (JP)
(74) Representative: Whalley, Kevin
(86) International application number: PCT/JP2003/010205
(87) International publication number: WO 2004/014668

(57) **Abstract**

A pneumatic tire for a two-wheeled motor vehicle in which a belt layer 26 includes a spiral belt (26A) where the direction of its cords is substantially a circumferential direction of the tire, and at least one angled belt (26B) that is provided on at least an outer layer of the spiral belt (26A) and whose cords have an angle with respect to an equatorial plane of the tire. On a tread surface portion of a tread (22) of the tire, there is provided, at least in a tread center region, a main groove component having an angle in the range of 0° or more to less than 20° with respect to the circumferential direction. Thus, a pneumatic tire for a two-wheeled motor vehicle is provided that is applicable to a front or rear wheel, and that possesses improved kinematical performance including the turning capability at a corner, grip limit, overall settling of vibrations of a vehicle body, slip-control performance, capability of absorbing unevenness of a road surface, and enhanced steering stability, which are realized by making use of respective advantageous characteristics of the respective belts.

## Description

### Technical Field

The present invention relates to a pneumatic tire for a two-wheeled motor vehicle. More specifically, the present invention pertains to a pneumatic tire for a two-wheeled motor vehicle, capable of enhancing the steering stability by being applied to at least one of the front and the rear wheels, and a pneumatic tire for a two-wheeled motor vehicle, capable of balancedly improving various performance such as uneven-wear resistance, steering stability, capability of absorbing evenness of a road surface, etc.

### Background Art

With the recent advancement of weight reduction and performance enhancement in vehicles, the securing of their stability in ultrahigh-speed running has become ever more important. As a result, the conventional angled belt configuration in which the cord direction has a predetermined angle with respect to the equatorial plane of a tire, has been given way to the spiral belt configuration that is low in its variation in ground-contacting shape in high speed running and superior in the durability at high speed, and in which the cord direction is substantially circumferential direction of the tire.

However, the spiral configuration originally has the drawback of having a low tread surface bending rigidity (in the tread width direction), and therefore, it has involved problems with steering performance, such as a poor handling response and a low grip force with respect to a road surface. With this being the situation, the present applicant proposed earlier a pneumatic tire for a two-wheeled motor vehicle, capable of improving the durability at high speed running by adopting the spiral belt configuration, reinforcing the soft construction of the spiral belt with cap rubber having a high strength by adopting a cap-base structure for the tread, and keeping small the change in handling performance by making the rigidity of the base rubber lower than that of the cap rubber (Japanese Unexamined Patent Application Publication No. 2000-177318).

The spiral belt configuration constituted only by steel cords for the purpose of enhancing tread surface bending rigidity would be too high in the rigidity to maintain high riding comfort and slip resistance without difficulty. Also, in the spiral belt configuration constituted only by steel cords, merely lowering the driving count of cords would have detrimental effects, such as a reduction in anti-fatigue properties of tread rubber and a ply material with respect to repetitive bending, due to a reduction in the breaking strength with respect to pneumatic pressure, a decrease in the puncture resistance, a reduction in bending rigidity in the close-sectional direction. In order to solve such problems, the present applicant proposed earlier a pneumatic tire and a manufacturing method therefor that are capable of improving the steering stability and other performance by making the driving count a proper one, in a spiral structure based on a combination of two kinds of cords(Japanese Unexamined Patent Application Publication NO.2002-59707).

On the other hand, there has also been known a radial tire for a two-wheeled motor vehicle, having at least one layer of angled belt together with the conventional spiral belt. It is known that such a tire has an advantage in the level of kinematical performance including the turning capability at a corner and grip limit, over the tire with a belt structure having no angled belt but having a spiral belt alone.

However, in the conventional radial tire for a two-wheeled motor vehicle, which has used in combination of a spiral belt and an angled belt, the distribution of bending rigidity in the tread region has not been optimized, so that the overall settling of vibrations of a vehicle body, slip-control performance, capability of absorbing unevenness of a road surface have not sufficiently been optimized. In particular, it is known that the above-described tendencies are strong for a belt structure having an angled belt on the outer layer of a spiral belt.

To solve such problems, countermeasures have been taken, such as the lowering of the strength of a cord material of the angled belt, the enlargement of the cord angle with respect to the circumferential direction, the separation of the angled belt at the center portion, and the like. However, such countermeasures have not been able to attain the optimization of tensile rigidity and bending rigidity of the belt in the close-sectional direction, thus failing to sufficiently exploit the advantages of the angled belt.

In the case of the conventional pneumatic tire for a two-wheeled motor vehicle with a radial carcass structure having a spiral belt or an angled belt, particularly, that for a front wheel, the conventional pattern of truncated chevron shapes as viewed from the rear side of a rotational direction of the tire, has been advantageous, on a wet road surface (hereinafter abbreviated as "wet"), for the steering stability, such as the cornering grip and braking capability (hereinafter collectively referred to as "wet characteristics") of the tire. However, on a dry road surface (hereinafter abbreviated as "dry"), the above-described pattern has been disadvantageous in that it does not allow the tire to maintain high cornering grip since it is difficult to enable the tire to maintain high rigidity with respect to lateral inputs, and in addition, on a dry road surface, it has been disadvantageous in the uneven-wear of ground-contacting portion under cornering conditions. Conversely, the conventional pattern of inverted truncated chevron shapes as viewed from the rear side of a rotational direction of the tire, on a dry road surface, allows the tire to maintain high rigidity with respect to lateral inputs, and hence have been advantageous for the cornering grip and also for the uneven-wear of ground-contacting portion under cornering conditions. However, the above-described pattern has been disadvantageous for the "wet characteristics". In either case, the bending rigidity in the close-sectional direction of the tire at the tread center portion has been too high to secure sufficient capability of absorbing unevenness of a road surface. In addition, it has been difficult to keep high the "wet characteristics" and turning capability in a small camber region, which is frequently used in general road running.

Furthermore, in front tires, much of which have a structure with an angled belt, the cornering force at the tire center portion has been too high to maintain a sufficiently high shimmy resistance.

Accordingly, a first object of the present invention is to provide a pneumatic tire for a two-wheeled motor vehicle which tire is applicable to a front or rear wheel, which employs a spiral belt and an angled belt in combination to thereby make use of respective advantageous characteristics of the respective belts, and which possesses improved kinematical performance including the turning capability at a corner, grip limit, overall settling of vibrations of a vehicle body, slip-control performance, capability of absorbing unevenness of a road surface, and enhanced steering stability.

A second object of the present invention is to provide a pneumatic tire for a two-wheeled motor vehicle which tire is applicable to the front or rear wheel, and in which the uneven-wear resistance, capability of absorbing unevenness of a road surface, "wet characteristic", steering stability, and shimmy resistance are optimized.

### Disclosure of Invention

After an elaborate investigation to solve the above-described problems, the present inventor has found that the first object can be achieved by installing at least a particular main groove component into the center region of the tread surface portion of the tread, in a belt configuration in which the spiral belt and the angled belt are used in combination, and the inventor has attained a first invention.

According to the present first invention, a pneumatic tire for a two-wheeled motor vehicle comprises bead cores embedded in a pair of right and left bead portions; a carcass toroidally extended from one bead portion to the other, the opposite end portions thereof being wound around the respective bead cores and locked in the respective bead portions; a belt layer disposed radially on the outside of a crown portion of the carcass; and a tread portion disposed radially on the outside of the belt layer. Herein, the belt layer includes a spiral belt where the direction of cords thereof is substantially a circumferential direction of the tire, and at least one angled belt that is disposed on at least an outer layer of the spiral belt and whose cords have an angle with respect to an equatorial plane of the tire. Also, the tread surface portion of the tread of the tire includes, at least in a tread center region, a main groove component having an angle in the range of 0° or more to less than 20° with respect to the circumferential direction.

In the pneumatic tire for a two-wheeled motor vehicle according to the present first invention, it is preferable that, in a no-load standard state where the tire is assembled to a standard rim specified in standards and filled with 80% of the highest internal pressure in accordance with the tire standards, the center of the groove width of the main groove component be positioned in the region whose opposite edges are each apart from the tread center portion by substantially 10% of the periphery length between the opposite edges of the tread.

Also, it is preferable that, in a no-load standard state where the tire is assembled to a standard rim specified in the standards and filled with 80% of the highest internal pressure in accordance with the tire standards, the total groove length of the main groove component be not less than 50% of the circumferential length of the tread center portion.

It is preferable that, in a no-load standard state where the tire is assembled to a standard rim specified in the standards and filled with 80% of the highest internal pressure in accordance with the tire standards, the groove width of the main groove component be in the range of 1.5% to 7.5%, both inclusive, of the periphery length between the opposite edges of the tread.

It is preferable that the cords constituting the spiral belt and the cords constituting the angled belt each have an initial tensile resistance of not less than 50 cN/cord.

It is preferable that the cord angle of the angled belt be in the range of 80° to 20°, both inclusive, with respect to the equatorial plane of the tire.

It is preferable that a total width of the angled belt be in the range of 150% to 70%, both inclusive, of the tread width.

Hereinafter, operations in the first invention will be described.

In the radial-structured pneumatic tires for a two-wheeled motor vehicle, each including a conventional spiral belt and at least one angled belt disposed on the outer layer thereof, a tire with a tread pattern having, in a tread center region, a main groove component having an angle in the range of 0° or more to less than 20° with respect to the circumferential direction, has never been proposed.

As compared with the structure without an angled belt, or the structure having the angled belt in an inner layer of the spiral belt, the structure having the angled belt on the outer layer of the spiral belt is advantageous in the level of kinematical performance including the turning capability at a corner, and grip limit, but disadvantageous in the overall settling of vibrations of a vehicle body, slip-control performance, and capability of absorbing unevenness of a road surface. To solve this problem, in the present first invention, a tread pattern with the main groove component having an angle in the range of 0° or more to less than 20° with respect to the circumferential direction, is provided in the center region in combination. By virtue of this arrangement, it becomes possible to maintain low bending rigidity of the tread center, alleviate the overall vibrations of a vehicle body, and maintain high slip-control performance and capability of absorbing unevenness of a road surface. This allows the performance deteriorated by the addition of the reinforcing angled belt to be complemented. Furthermore, this makes it possible to exploit, to the maximum extent possible, the level of kinematical performance including the turning capability at a corner and grip limit based on the improvement in the tensile rigidity and bending rigidity in the close-sectional direction owing to the addition of the angled belt. This results in that the flexibility in structure when the present first invention is applied to the front wheel or the rear wheel, increases. As a consequence, in the present first invention, it is possible to improve, in easy and balanced manners, the kinematical performance including the turning capability at a corner, grip limit, overall settling of vibrations of a vehicle body, slip-control performance, and capability of absorbing evenness of a road surface, and to enhance the steering stability.

After a further elaborate investigation to solve the above-described problems, the present inventor has found that the second object can be achieved by installing two kinds of particular tilting main grooves and a particular main groove component in predetermined places, in a belt configuration in which the spiral belt and the angled belt are used in combination, or in a belt configuration in which either one of them is used, and the inventor has attained a second invention described below.

According to the present second invention, a pneumatic tire for a two-wheeled motor vehicle comprises bead cores embedded in a pair of right and left bead portions; a carcass toroidally extended from one bead portion to the other, the opposite end portions thereof being wound around the respective bead cores and locked in the respective bead portions; a belt layer disposed radially on the outside of a crown portion of the carcass; and a tread portion disposed radially on the outside of the belt layer. Herein, the belt layer comprises a spiral belt where the direction of cords is substantially a circumferential direction of the tire, and/or an angled belt whose cords have an angle with respect to an equatorial plane of the tire. Also, the tread surface portion of the tread includes a tilting main groove A that extends from a tread center region to shoulder regions in the direction from upstream to downstream, at an angle on the acute angle side, in the range of 45° or more to less than 75° with respect to the circumferential direction; a tilting main groove B that extends from downstream to upstream, at an angle on the acute angle side, in the same range with respect to the circumferential direction; and a main groove component C having an angle in the range of 0° or more to less than 20° with respect to the circumferential direction, in the tread center region.

In the pneumatic tire for a two-wheeled motor vehicle according to the present second invention, it is preferable that, in a no-load standard state where the tire is assembled to a standard rim specified in standards and filled with 80% of the highest internal pressure in accordance with the tire standards, the groove width of each of the tilting main groove A and the tilting main groove B be in the range of 1.5% to 7.5%, both inclusive, of the periphery length between the opposite edges of the tread. Simultaneously, it is preferable that the groove length of each of the tilting main groove A and the tilting main groove B be not less than 20% of the periphery length between the opposite edges of the tread.

Also, it is preferable that the allocation of the groove length and the groove area between the tilting main grooves A and B satisfy the relationship represented by the following expressions:
(a) the allocation of the groove length: B:A = 10:10 to 25;
(b) the allocation of the groove area: B:A = 10:10 to 25.

It is preferable that, in a no-load standard state where the tire is assembled to a standard rim specified in standards and filled with 80% of the highest internal pressure in accordance with the tire standards, the center of the groove width of the main groove component C be positioned in the region whose opposite edges are each apart from the tread center portion by substantially 10% of the periphery length between the opposite edges of the tread.

In a no-load standard state where the tire is assembled to a standard rim specified in the standards and filled with 80% of the highest internal pressure in accordance with the tire standards, preferably, the total groove length of the main groove component C is not less than 15%, and more preferably, not less than 30%, of the circumferential length of the tread center portion.

It is preferable that, when the belt layer has at least one angled belt on the outer layer of the spiral belt, the total groove length of the main groove component C be not less than 50% of the circumferential length of the tread center portion, in a no-load standard state where the tire is assembled to a standard rim specified in the standards and filled with 80% of the highest internal pressure in accordance with the tire standards.

The main groove component C may be formed by inflecting at least one of the tilting main groove A and the tilting main groove B so as to have an angle in the range of 0° or more to less than 20° with respect to the circumferential direction, in the tread center region.

Also, the main groove component C may be such that it is a groove other than the tilting main groove A and the tilting main groove B, and that it is at least one linear groove or zigzag groove in the circumferential direction, disposed in the tread center region.

It is preferable that, in a no-load standard state where the tire is assembled to a standard rim specified in the standards and filled with 80% of the highest internal pressure in accordance with the tire standards, the area ratio of all grooves in a pattern on the tread surface portion be in the range of 5% to 20%, both inclusive.

It is preferable that the cords constituting the spiral belt and the cords constituting the angled belt each have an initial tensile resistance of not less than 50 cN/cord.

Hereinafter, operations in the second invention will be described.

The tread patterns on the conventional pneumatic tire for a two-wheeled motor vehicle have been formed so that a main groove is formed in one direction from the tread center region to shoulder regions with respect to the input direction and the flow of water under "wet" conditions, and that water flows along this main groove.

In contrast, in the present second invention, by combining the tilting main groove A and the tilting main groove B, and particularly, by optimally disposing these grooves in integral and balanced manners, it is feasible to improve cornering grip due to the pattern edge effect with respect to the input in the tilting main grooves that forms truncated chevron forms as viewed from the rear side of a rotational direction of the tire, and inhibit the reduction in the pattern rigidity during cornering in the tilting main grooves that forms inverted truncated chevron forms as viewed from the rear side of a rotational direction of the tire. This allows the enhancement of the cornering grip performance under "dry" conditions, thereby reducing the deterioration of uneven wear resistance to a minimum.

Also, installing the tilting main groove A and the tilting main groove B in combination enables the distribution of the bending rigidity of the tread portion in the ground-contacting portion during cornering to be optimized. Thereby, the ground-contacting property is improved and the cornering grip and turning capability is enhanced, and hence, the above-described advantages can be exploited to the maximum extent possible for important performance suited to various usage, and the disadvantages can be reduced to a minimum.

Furthermore, in the present second invention, by additionally combining the main groove component C, and particularly, by optimally disposing this groove component C together with the tilting main groove A and the tilting main groove B in integral and balanced manners, the distribution of bending rigidity of the tread portion, required to secure the capability of absorbing unevenness of a road surface and steering stability can be optimized. This makes it possible to improve the capability of absorbing unevenness of a road surface, and keep high the "wet characteristics" and turning capability in a small camber region, which are frequently used in general road running. In addition, regarding handle shimmy, since grooves can be disposed in effective positions to reduce a cornering power, a sufficiently high shimmy resistance can be maintained in front tires, much of which generally have a structure with an angled belt (bias belt). As a result, in the present second invention, by optimally disposing the tilting main groove A, the tilting main groove B, and the main groove component C, the uneven-wear resistance, capability of absorbing unevenness of a road surface, "wet characteristics", steering stability, and shimmy resistance can be optimized.

Herein, the "load" refers to a maximum load (maximum loading capacity) on a single wheel in a size to be applied, set forth in the following standards; the "internal pressure" refers to an air pressure corresponding to the maximum load (maximum load-carrying capacity) on a single tire in a size to be applied, set forth in the following standards; and the "rim" refers to a standard rim (or an "approved rim" or a "recommended rim") in a size to be applied, set forth in the following standards.

Also, the "standards" are ones defined by industrial standards effective for a region where tires are manufactured or used. For example, in the United State of America, the standards are provided in the "Year Book" established by "The Tire and Rim Association Inc., in Europe, they are provided in the "Standerds Manual" established by The European Tire and Rim Technical Organization", and in Japan, they are provided in the "JATMA Year Book" established by "The Japan Automobile Tyre Manufacturer Association".

### Brief Description of the Drawings

Fig. 1 is a sectional view of a pneumatic tire for a two-wheeled motor vehicle according to an embodiment of the present invention.
Fig. 2 is a diagram showing the cord angle θ of an angled belt.
Fig. 3 is a diagram showing a total width BW of an angled belt.
Fig. 4 is a developed plan view of a tread pattern of a tire according to the embodiment of the present first invention.
Fig. 5 is a diagram showing the angle α of a main groove component M1 with respect to the circumferential direction.
Fig. 6 is a diagram showing an installation position of the main groove component M1.
Fig. 7 is a diagram showing a total groove length T of the main groove component M1.
Fig. 8 is a developed plan view of a tread pattern of a tire according to another embodiment of the present first invention.
Fig. 9 is a developed plan view of a tread pattern of a tire according to an embodiment of the present second invention.
Fig. 10 is a developed plan view of a tread pattern of a tire according to another embodiment of the present second invention.
Fig. 11 is a developed plan view of a tread pattern of a tire according to still another embodiment of the present second invention.
Fig. 12 is a developed plan view of a tread pattern of a tire according to a conventional example 1.
Fig. 13 is a developed plan view of a tread pattern of a tire according to a conventional example 2.
Fig. 14 is a developed plan view of a tread pattern of a tire according to a conventional example 3.
Fig. 15 is a developed plan view of a tread pattern of a tire according to a conventional example 4.
Fig. 16 is a developed plan view of a tread pattern of a tire according to a conventional example 5.

### Best Mode for Carrying Out the Invention

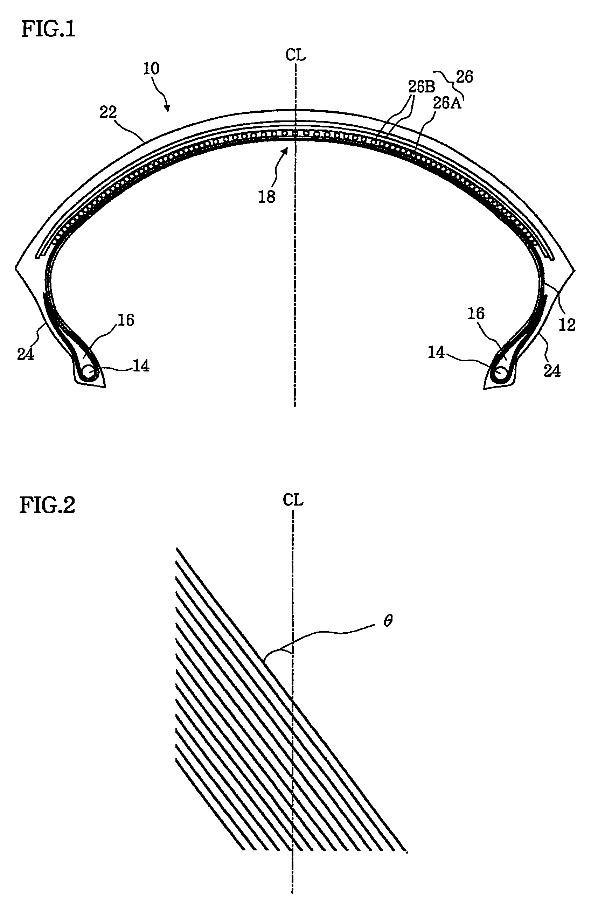

The pneumatic tire according to an embodiment of the present first invention will be described with reference to Fig. 1.

Fig. 1 shows a pneumatic tire 10 for a two-wheeled motor vehicle according to the embodiment of this first invention. A carcass ply member 12, constituting a skeleton of the pneumatic tire 10 is one formed by arranging, in parallel, organic fiber cords of nylon, Polyester, or the like and applying rubber coating to them. The cords are constituted of a plurality of layers each of which is arranged in the direction crossing an equatorial plane CL of the pneumatic tire 10 at an angle in the range of 20° to 90°, both inclusive. Here, the cords of a plurality of layers of carcass plies 12 cross one another, and tilt to the directions opposite to one another relative to the equatorial plane CL of the tire.

In the vicinities of the opposite ends of the carcass ply member 12, there are provided a pair of bead cores 14 around each of which a steel wire is annularly wound in a bundle. The carcass ply member 12 toroidally extends over the pair of bead cores 14, and each of the opposite ends of the carcass ply member 12 is wound around the bead core 14 for locking. The gap in the carcass ply member 12 above each of the bead cores 14 is filled with a bead filler 16 made of hard rubber and formed into a taper shape.

On a crown portion 18 of the pneumatic tire 10, there is provide a tread 22 formed of rubber material into an annular shape and contacting an road surface. On the carcass ply member portion 12, which connects the bead cores 14 and the respective opposite edges of the tread 22, there are provided respective side walls 24. Also, an inner liner (not shown) is formed on an innermost layer of the pneumatic tire 10.

In the present first invention, in the pneumatic tire 10 with the above-described structure for a two-wheeled motor vehicle, a belt layer 26, detailed below, is installed between the carcass ply member 12 and the tread portion 22. In the preferable embodiment shown in Fig. 1, two angled belts 26B are provided on the outer layer of the spiral belt 26A for such a belt layer 26. However, the desired effect of the present first invention can be attained if only at least one angled belt 26B is provided on at least an outer layer of the spiral belt 26A.

The spiral belt 26A is formed by spirally winding one long length of rubber-coated cord (not shown) obtained by coating the cord with rubber, or a belt-shaped ply (not shown) formed by coating a plurality of cords with rubber, and the cord direction is made to be substantially the circumferential direction of the tire.

From the viewpoints of the securing of a hoop strength for a belt material and the securing of a reinforcing effect, and the like, it is preferable that the spiral belt 26A have cords with an initial tensile resistance of not less than 50 cN/cord. The cords for the spiral belt 26A may be selected as appropriate, besides steel cords, from among materials such as organic fibers of aramid (which is an aromatic polyamide; for example Kevlar™ made by du Pont Corp.), polyethylene naphthalate (PEN), polyethylene terephthalate (PET), rayon, nylon (which is an aromatic polyamide), and further glass fiber.

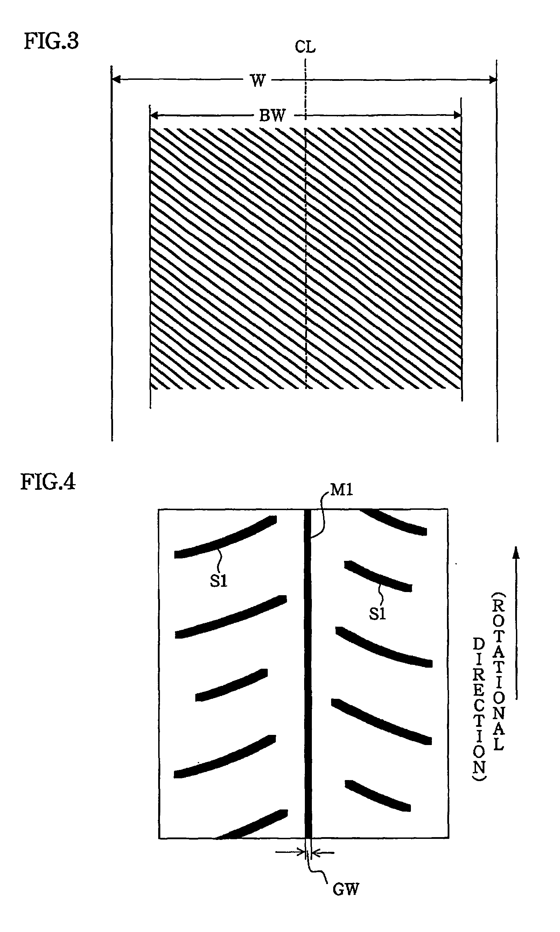

Next, with a view toward exploiting the level of kinematical performance including the turning capability at a corner and the grip limit, based on the improvement in the tensile rigidity and bending rigidity in the close-sectional direction, to the maximum extent possible, it is preferable that the two angled belts 26B provided on the outer layer of the spiral belt 26A each have a cord angle θ in the range of 80° to 20°, both inclusive, with respect to the equatorial plane CL of the tire (see Fig. 2). Also, for the same reason, it is preferable that the total width BW of each of the angled belts 26B be 150% to 70%, both inclusive, of the tread width W (see Fig. 3).

The angled belt 26B is a ply formed by rubber-coating a plurality of cords arranged side by side, and is installed at an angle with respect to the equatorial plane of the tire. As in the case of the spiral belt 26A, from the viewpoints of the securing of a hoop strength for a belt material and the securing of a reinforcing effect, and the like, it is preferable that the angled belts 26B each have cords with an initial tensile resistance of not less than 50 cN/cord. The material for the angled belts 26B can also be selected as appropriate from among the same materials as those for the spiral belt 26A.

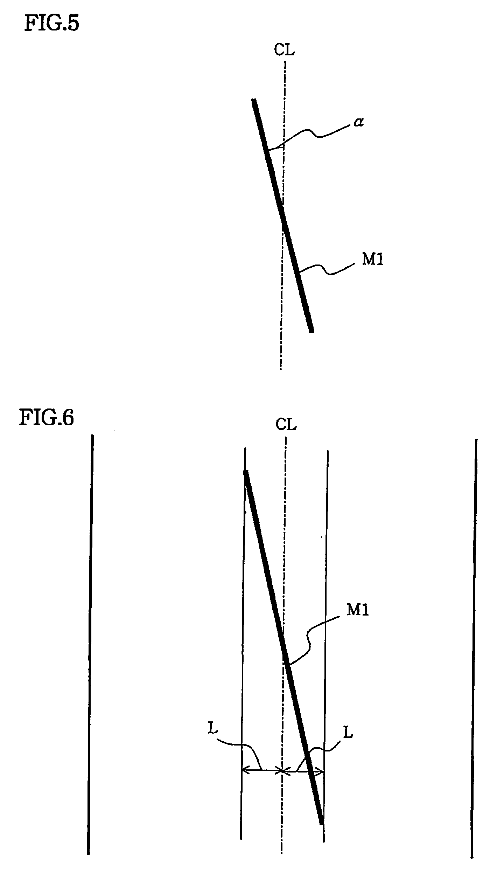

In the pneumatic tire for a two-wheeled motor vehicle according to the present first invention, along with the above-described basic skeletal structure, a main groove component M1 is provided in the center region on the tread surface portion of the tread 22, as shown in Fig. 4. The main groove component M1 must be disposed so as to have an angle α in the range of 0° or more to less than 20° with respect to the circumferential direction, in the tread center region (see Fig. 5). By such a disposition of the main groove component M1, it is possible to maintain low bending rigidity in the tread center region, alleviate the overall vibrations of a vehicle body, maintain high slip-control performance and capability of absorbing unevenness of a road surface, thereby complementing the performance deteriorated by the addition of the reinforcing angled belt. With a view toward improving on operation based on the disposition of the main groove component M1, it is preferable that, in a no-load standard state where the tire is assembled to a standard rim specified in the standards and filled with 80% of the highest internal pressure in accordance with the tire standards, the center of the groove width of the main groove component M1 be positioned in the region whose opposite edges are each apart from the tread center portion by substantially 10% of the periphery length between the opposite edges of the tread (see Fig. 6).

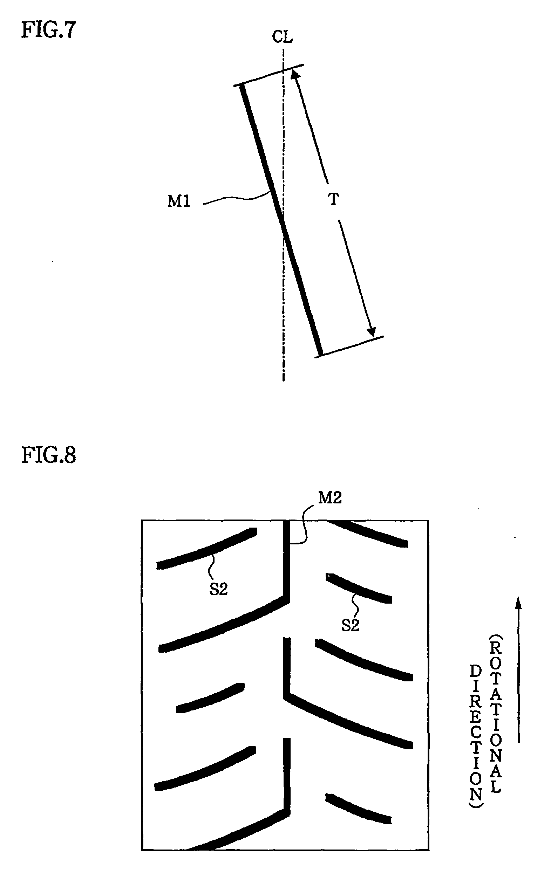

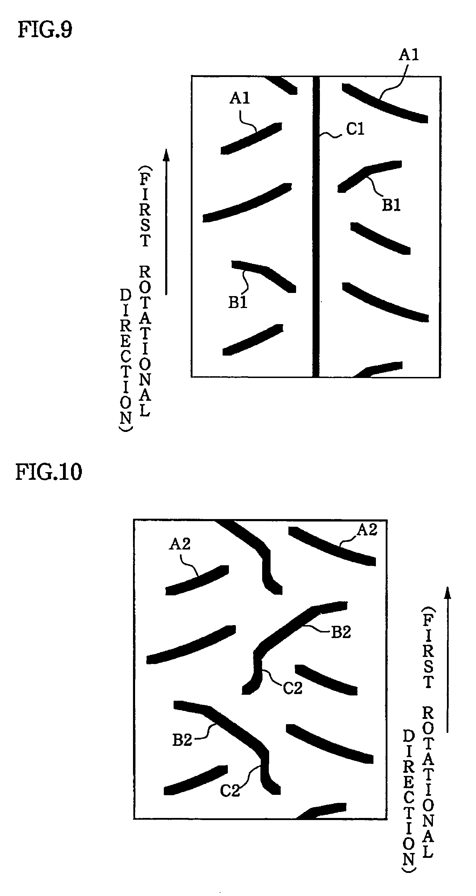

For the same reason, it is preferable that in a no-load standard state where the tire is assembled to a standard rim specified in the standards and filled with 80% of the highest internal pressure in accordance with the tire standards, the total groove length T of the main groove component M1 be not less than 50% of the circumferential length of the tread center portion (see Fig. 7). Therefore, instead of continuously disposing the main groove component M1 in the circumferential direction as shown in Fig. 4, even if the main groove component M2 is discontinuously disposed in the circumferential direction as in the tread patterns of the pneumatic tire according to another embodiment of the present first invention shown in Fig. 8, it is possible to improve on the above-described operation if only the main groove component M2 has a total length of not less than 50% of the circumferential length of the tread center portion.

Furthermore, in order to improve on the above-described operation, it is preferable that, in a no-load standard state where the tire is assembled to a standard rim specified in the standards and filled with 80% of the highest internal pressure in accordance with the tire standards, the width GW of the main groove component M1 be in the range of 1.5% to 7.5%, both inclusive, of the periphery length between the opposite edges of the tread (see Fig. 4).

In the present first invention, from the viewpoint of securing the dewatering capability, as in the case of the conventional patterns, the tilting main grooves or the like other than the main groove component M1 can be installed as appropriate. For example, in the tread pattern of the pneumatic tire according to the embodiment of the present first invention shown in Fig. 4, there are provided tilting main grooves S1 forming truncated chevron shapes as viewed from the rear side of a rotational direction. The installation of the tilting main grooves S1 provides a pattern edge effect on inputs, and allows an improvement in cornering grip to be achieved.

Also, in the tread pattern of the pneumatic tire according to another embodiment of the present first invention shown in Fig. 8, when the main groove component M2 is discontinuous in the circumferential direction, tilting main grooves S2 that form truncated chevron shapes as viewed from the rear side of a rotational direction, are alternately formed from one end of the main groove component M2 in the circumferential direction.

Next, the pneumatic tire according to an embodiment of the present second invention will be described.

Unlike the first invention, in this second invention, its belt structure is not limited to the combined-type belt structure in which a spiral belt and an angled belt (or angle belts) are used in combination. A belt structure in which either one of these belt structures is used, may be adopted besides the above-described combined-type belt structure. The basic structures other than the belts may be the same as those in the pneumatic tire 10 for a two-wheeled motor vehicle according to the embodiment of the first invention shown in Fig. 1.

In the pneumatic tire according to an embodiment of the second invention, along with the above-described basic skeletal structure, tilting main groove A1, tilting main groove B1, and a main groove component C1 are provided in the tread surface portion of the tread 22, as shown in Fig. 9. The tilting main groove A1 must be arranged to extend from the tread center region to shoulder regions in the direction from upstream to downstream, at an angle on the acute angle side, in the range of 45° or more to less than 75° with respect to the circumferential direction. The tilting main groove B1 must be arranged to extend from downstream to upstream stream, at an angle on the acute angle side, in the same range with respect to the circumferential direction. Also, the main groove component C1 must be disposed to have an angle in the range of 0° or more to less than 20° with respect to the circumferential direction, in the tread center region (herein, C1 corresponds to M1 in Fig. 5). Here, "upstream" refers to the forward side in a first rotational direction of the tire, and "downstream" refers to rearward side in the first rotational direction of the tire.

By such a disposition of the tilting main grooves A1 and B1, the cornering grip performance on a dry road surface can be improved, and the deterioration of the uneven wear resistance is reduced to a minimum. Simultaneously, the road holding is improved, and the cornering grip and turning capability are enhanced. Also, by means of the main groove component C1, the distribution of bending rigidity in the tread region necessary to secure the capability of absorbing unevenness of a road surface and steering stability can be optimized, and the "wet characteristics" and turning capability in a small camber region can be kept high. In addition, in the front tire having angled belt structure, a sufficiently high shimmy resistance can be maintained.

In the present second invention, as shown in Fig. 9, in the tilting main grooves A1, which form a pattern of truncated chevron shapes as viewed from the rear side of a rotational direction of the tire, and the tilting main grooves B1, which form a pattern of inverted truncated chevron shapes as viewed from the rear side of a rotational direction of the tire, right and left pattern elements may be mutually offset (i.e., mutually out of phase) with respect to the tread center portion. The offset amount is preferably in the range of 0 to one-twentieth the entire circumferential length, inclusive. The pitch of the tilting main grooves A1 and tilting main grooves B1 is preferably in the range of one-hundredth to one-twentieth the entire circumferential length, both inclusive. Also, the tilting main grooves A1 and the tilting main grooves B1 may have a linear shape or a rounded shape. Furthermore, as shown in Fig. 9, these grooves may include folding points as in the tilting main grooves B1. The main groove component C1 shown in Fig. 9 is formed linearly in the circumferential direction, in the tread center portion, but it may be of an intermittent shape or a zigzag shape.

In the present second invention, with a view toward improving on the above-described operation based on the disposition of the tilting main grooves A1 and the tilting main grooves B1, it is preferable that, in a no-load standard state where the tire is assembled to a standard rim specified in the standards and filled with 80% of the highest internal pressure in accordance with the tire standards, the groove width of each of the tilting main groove A1 and the tilting main groove B1 be in the range of 1.5% to 7.5%, both inclusive, of the periphery length between the opposite edges of the tread, and that the groove length of each of the tilting main groove A and the tilting main groove B be not less than 20% of the periphery length between the opposite edges of the tread. Moreover, it is preferable that the allocation of the groove length and the groove area between the tilting main grooves A1 and B1 satisfy the relationship represented by the following expressions:
(a) the allocation of the groove length: B1:A1 = 10:10 to 25;
(b) the allocation of the groove area: B1:A1 = 10:10 to 25.

Also, with a view toward improving on the above-described operation based on the disposition of the main groove component C1, it is preferable that, in a no-load standard state where the tire is assembled to a standard rim specified in the standards and filled with 80% of the highest internal pressure in accordance with the tire standards, the center of the groove width of the main groove component C1 be positioned in the region whose opposite edges are each apart from the tread center portion by substantially 10% of the periphery length between the opposite edges of the tread (herein, C1 corresponds to M1 in Fig. 6). Moreover, in a no-load standard state where the tire is assembled to a standard rim specified in the standards and filled with 80% of the highest internal pressure in accordance with the tire standards, preferably, the total groove length of the main groove component C1 is not less than 15%, and more preferably, not less than 30%, of the circumferential length of the tread center portion. Furthermore, when the belt layer has at least one angled belt in the outer layer of the spiral belt, it is preferable that the total groove length of the main groove component C1 be not less than 50% of the periphery length of the tread center portion, in a no-load standard state where the tire is assembled to a standard rim specified in the standards and filled with 80% of the highest internal pressure in accordance with the tire standards (herein, C1 corresponds to M1 in Fig. 7). This allows sufficiently high shimmy resistance to be maintained.

While not shown in the figures, the tread patterns of the pneumatic tire according to another embodiment of the present second invention may include a tread pattern in which the main groove component C1 is a groove other than the tilting main grooves A1 and B1, and is at least one linear groove or zigzag groove in the circumferential direction, disposed in the tread center region.

In the tread pattern of the pneumatic tire shown in Fig. 10, according to still another embodiment of the present second invention, the main groove component C2 is formed by inflecting the tilting main grooves B2 in the tread center region. In this case, the main groove component C2 may be formed by inflecting the tilting main grooves A2, or both of the tilting main groove A2 and the tilting main groove B2. The tilting main groove C2 formed by such inflection is arranged to have an angle in the range of 0° or more to less than 20° with respect to the circumferential direction.

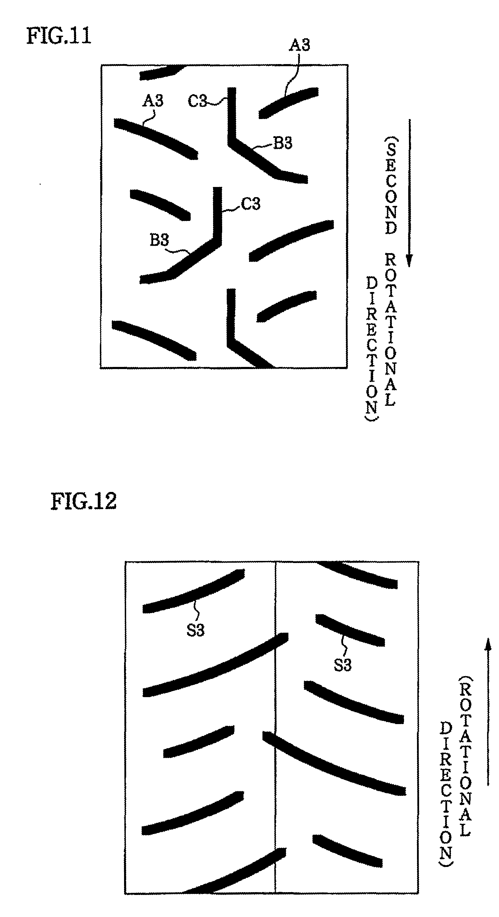

Likewise, in the tread pattern of the pneumatic tire shown in Fig. 11, according to a further embodiment of the present second invention, the main groove component C3 is formed by inflecting the tilting main grooves B3 in the tread center region.

In the present second invention, with a view toward improving on the above-described operation, when the tilting main groove A, the tilting main groove B, and the main groove component C are disposed in combination, it is preferable that, in a no-load standard state which the tire is assembled to a standard rim specified in the standards and filled with 80% of the highest internal pressure in accordance with the tire standard, the area ratio of all grooves in a pattern on the tread surface portion in the tread be in the range of 5% to 20%, both inclusive.

In the pneumatic tire according to the present second invention, from the viewpoint of giving importance to the uneven wear resistance and wet steering stability (such as dewatering performance), as well as to the dry steering stability (road surface grip performance, etc.), the tire can be mounted upon selecting its rotational direction, and also the tire can be rotated in opposite directions.

For example, when giving importance to both of the wet and dry steering stability (e.g., concerning the rear tire or the like), the mounting of tire can be performed in accordance with "the first rotational direction" shown in Figs. 10 and 11. On the other hand, when giving importance to the uneven wear (particularly, concerning the front tire or the like), the mounting of tire can be performed in accordance with "a second rotational direction" shown in Fig. 11, which is the reverse of the "first rotational direction".

Next, descriptions will be made of running tests that were performed in comparison between the examples of pneumatic tires described in the embodiments and tires according to conventional examples, and the test results.

First, examples according to the present first invention and conventional examples are explained.

### EXAMPLE 1

The pneumatic tire 10 for a two-wheeled motor vehicle according to the embodiment shown in Fig. 1 was used as a rear tire. This tire has a size of 190/50ZR17, and is provided with two nylon carcass plies and bead fillers having a hardness of 95° (Shore A hardness).

The spiral belt 26A was formed by spirally winding one long length of rubber-coated cord made of aramid fibers (Kevlar™ made by du Pont Corp.; twisted structure: 1670d/2; initial tensile resistance: 736 cN/cord) obtained by coating the cord with rubber. The driving count was 30 cords/25 mm.

On the other hand, the two angled belt 26B provided on the out layer of the spiral belt 26A are belt plies (driving count: 18 cords/25 mm) of cords made of aramid fibers (Kevlar™ made by du Pont Corp.; twisted structure: 1670d/2; initial tensile resistance: 736 cN/cord). The cord angle thereof is 45° with respect to the equatorial plane of the tire. The two angled belts 26B cross each other, and simultaneously, tilt to the directions opposite to each other relative to the equatorial plane CL. Also, the total width of the two angled belt 26B is 95% of the tread width.

As a pattern on the tread surface portion of the tread 22, the type shown in Fig. 4 was employed. The main groove component M1 is arranged linearly in the circumferential direction, in the tread center portion. The groove width GW of the main groove component M1 is 3% of the periphery length between the opposite edges of the tread, in a no-load standard state where the tire is assembled to a standard rim specified in the JATMA standards and filled with 80% of the highest internal pressure in accordance with the tire standards. This tread pattern includes tilting main grooves S1, forming truncated chevron shapes as viewed from the rear side in the rotational direction of the tire.

The same rear tire as that used in the example was employed as a sample tire, with the exception that the type shown in Fig. 8 was used for a pattern on the tread surface portion in the tread 22. In the tread pattern shown in Fig. 8, discontinuous main groove component M2 exists in the circumferential direction, instead of the linear main groove component M1 in Fig. 4. The total groove length T of the main groove component M2 is 56% of the circumferential length of the tread center portion, in a no-load standard state where the tire is assembled to a standard rim specified in the JATMA standards and filled with 80% of the highest internal pressure in accordance with the tire standards. The area ratio of all grooves in a pattern on the tread surface portion is substantially the same as that in the example 1.

The same rear tire as that used in the example was employed as a sample tire, with the exception that the type shown in Fig. 12 was used for a pattern on the tread surface portion in the tread 22. In the tread pattern shown in Fig. 12, the main groove component M1 in Fig. 4 does not exist, and tilting main grooves S3, which form truncated chevron shapes as viewed from the rear side of the rotational direction of the tire, extend beyond the tread center portion alternately on the right and left sides. The area ratio of all grooves in a pattern on the tread surface portion is substantially the same as that in the example 1.

### CONVENTIONAL EXAMPLE 2

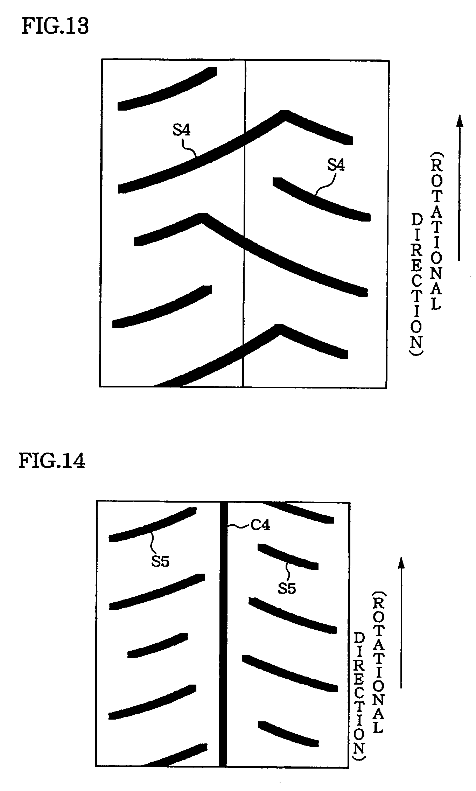

The same rear tire as that used in the example was employed as a sample tire, with the exception that the type shown in Fig. 13 was used for a pattern on the tread surface portion in the tread 22. In the tread pattern shown in Fig. 13, the main groove component M1 in Fig. 4 does not exist, and tilting main grooves S4, which form truncated chevron shapes as viewed from the rear side of the rotational direction of the tire, extend beyond the tread center portion alternately on the right and left sides, and opposing ends of the tilting main grooves S4 mutually couple in an alternating manner, thereby forming chevron shapes. The area ratio of all grooves in a pattern on the tread surface portion is substantially the same as that in the example 1.

With each of these tires mounted to a vehicle as a respective one of the rear tires, a conventional tire having a size of 120/70ZR17 was mounted as a front tire in each case, and running tests were performed. The results are shown in Table 1. Based on the feeling evaluations by drivers, the test results were represented as indices, taking the results in the conventional example 1 as 100. Larger the numeral value, the better the result.

The size of the rim of the front tire used for the running tests was MT3.50 x 17, and the size of the rim of the rear tire used then was MT6.00 x 17. The air pressure of the front and rear tires were 250 kPa and 290 kPa, respectively.

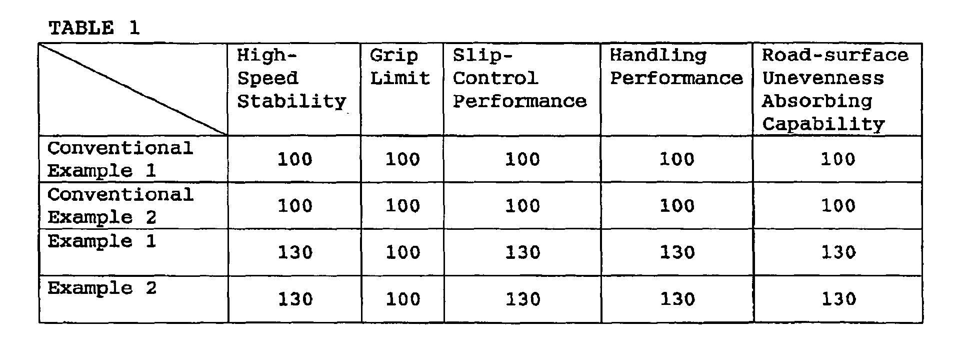

From the results in table 1, it was ascertained that, in the examples 1 and 2, the performance is balancedly improved in all aspects as compared with that in the conventional examples 1 and 2.

Next, in the tires in the example 1, the angle α of a main groove M1, the disposition range L of the main groove M1, the total groove length T of the main groove M1, the width GW of the main groove M1, the initial tensile resistance of a spiral belt cord, the initial tensile resistance of an angled belt cord, the cord angle θ of the angled belt, and the belt width BW of the angled belt are varied as shown in the following tables, and on the basis of the feelings obtained by the drivers, the feelings of rigidity, cornering grip, straight-driving stability (or turning stability) were evaluated based on a scale of 10. The score of 10 indicates a best state. A score higher than 10 means excessive property, and in this case, the rigidity tends to become high to thereby deteriorate the ride comfort. These results are shown in the following tables 2 to 9.

**TABLE 2**

| | | | | | |
|---|---|---|---|---|---|
| Angle of Main Groove M1, α (°) | 0 | 10 | 20 | 30 | 40 |
| Feeling of Rigidity | 9 | 10 | 11 | 13 | 15 |
| Cornering Grip | 7 | 8 | 7 | 5 | 4 |
| Straight-Driving Stability | 8 | 7 | 6 | 5 | 4 |

**TABLE 3**

| | | | | | |
|---|---|---|---|---|---|
| Disposition Range of Main Groove M1, % | 0 | 5 | 10 | 15 | 20 |
| Feeling of Rigidity | 9 | 10 | 9 | 7 | 6 |
| Cornering Grip | 9 | 9 | 8 | 6 | 5 |
| Straight-Driving Stability | 9 | 9 | 9 | 8 | 7 |

**TABLE 4**

| | | | | | |
|---|---|---|---|---|---|
| Total Length T of Main Groove Component M1, % | 30 | 40 | 50 | 60 | 70 |
| Feeling of Rigidity | 14 | 13 | 11 | 10 | 9 |
| Cornering Grip | 5 | 7 | 8 | 9 | 8 |
| Straight-Driving Stability | 5 | 6 | 7 | 8 | 9 |

**TABLE 5**

| | | | | | |
|---|---|---|---|---|---|
| Width GW of Main Groove M1, % | 1 | 1.5 | 4.5 | 7 | 7.5 |
| Feeling of Rigidity | 3 | 6 | 10 | 12 | 15 |
| Cornering Grip | 3 | 6 | 9 | 7 | 5 |
| Straight-Driving Stability | 3 | 5 | 8 | 9 | 7 |

**TABLE 6**

| | | | | | |
|---|---|---|---|---|---|
| Initial Tensile Resistance of Spiral Belt Cord, cN/cord | 30 | 40 | 50 | 75 | 100 |
| Feeling of Rigidity | 2 | 4 | 5 | 6 | 7 |
| Cornering Grip | 2 | 4 | 5 | 5.5 | 6 |
| Straight-Driving Stability | 2 | 4 | 5 | 5.5 | 6 |

**TABLE 7**

| | | | | | |
|---|---|---|---|---|---|
| Initial Tensile Resistance of Angled Belt Cord, cN/cord | 30 | 40 | 50 | 75 | 100 |
| Feeling of Rigidity | 2 | 4 | 6 | 7 | 8 |
| Cornering Grip | 2 | 4 | 5 | 5.5 | 6 |
| Straight-Driving Stability | 2 | 4 | 5 | 5.5 | 6 |

**TABLE 8**

| | | | | | |
|---|---|---|---|---|---|
| Cord Angle of Angled Belt, θ (°) | 10 | 20 | 50 | 80 | 90 |
| Feeling of Rigidity | 17 | 12 | 10 | 8 | 6 |
| Cornering Grip | 2 | 6 | 8 | 7 | 5 |
| Straight-Driving Stability | 2 | 5 | 6 | 7 | 7 |

**TABLE 9**

| | | | | | |
|---|---|---|---|---|---|
| Width BW of Angled Belt, % | 50 | 70 | 110 | 150 | 170 |
| Feeling of Rigidity | 8 | 9 | 10 | 13 | 15 |
| Cornering Grip | 5 | 7 | 9 | 9 | 9 |
| Straight-Driving Stability | 5 | 7 | 8 | 7 | 5 |

Next, examples of the present second invention and conventional examples are described.

### EXAMPLE 3

In the pneumatic tire 10 for a two-wheeled motor vehicle, according to the embodiment shown in Fig. 1, a tire in which no spiral belt 26A is provided, and two angled belts 26B alone constitutes a belt layer, was used as a front tire. This tire has a size of MCR120/70ZR17, and is provided with two nylon carcass plies and bead fillers having a hardness of 95° (Shore A hardness).

The two angled belt 26B are belt plies (driving count: 18 cords/25 mm) of cords made of aramid fibers (Kevlar™ made by du Pont Corp.; twisted structure: 1670d/2; initial tensile resistance: 736 cN/cord). The cord angle thereof is 68° with respect to the equatorial plane of the tire. The two angled belt 26B cross each other, and simultaneously, tilt to the directions opposite to each other relative to the equatorial plane CL. Also, the total width of the two angled belt 26B is 95% of the tread width.

As a pattern on the tread surface portion in the tread 22, the type shown in Fig. 9 was used. Specifically, there are provided tilting main grooves A1, tilting main grooves B1, and a main groove component C1. The tilting main groove A1 is arranged to extend from the tread center region to the shoulder regions in the direction from upstream to downstream, at an angle of 60° on the acute angle side, with respect to the circumferential direction. The tilting main groove B1 is arranged to extend from downstream to upstream stream, at an angle of 60° on the acute angle side, with respect to the circumferential direction. Also, the main groove component C1 is arranged linearly in the circumferential direction, in the tread center region.

In the tilting main grooves A1 and the tilting main grooves B1, right and left pattern elements (a pattern: with 15 pitches in all) are mutually offset with respect to the tread center. The offset amount is one-half one pitch length of the pattern. The pitch of the tilting main grooves A1 and the tilting main grooves B1 is one-fifteenth the entire circumferential length. In a no-load standard state where the tire is assembled to a standard rim specified in the JATMA standards and filled with 80% of the highest internal pressure in accordance with the tire standards, the groove width of each of the tilting main groove A1 and the tilting main groove B1 is 3% of the periphery length between the opposite edges of the tread. Also, the groove lengths of the tilting main groove A1 and the tilting main groove B1 are 40% and 30% of the periphery length between the opposite edges of the tread, respectively. Furthermore, the allocation of the groove length and the groove area between the tilting main grooves A1 and B1 satisfies the relationship represented by the following expressions:
(a) the allocation of the groove length: B:A = 10:13;
(b) the allocation of the groove area: B:A = 10:13.

Moreover, in a no-load standard state which the tire is assembled to a standard rim specified in the JATMA standards and filled with 80% of the highest internal pressure in accordance with the tire standard, the area ratio of all grooves in a pattern on the tread surface portion is 12%.

### CONVENTIONAL EXAMPLE 3

The same front tire as that used in the example 3 was used as a sample tire, with the exception that the type shown in Fig. 14 was used for a pattern on the tread surface portion in the tread 22. In the tread pattern shown in Fig. 14, a main groove component C4 exists, and there are provided tilting main grooves S5, which form truncated chevron shapes as viewed from the rear side of the rotational direction of the tire. The area ratio of all grooves in a pattern on the tread surface portion is substantially the same as that in the example 3.

### CONVENTIONAL EXAMPLE 4

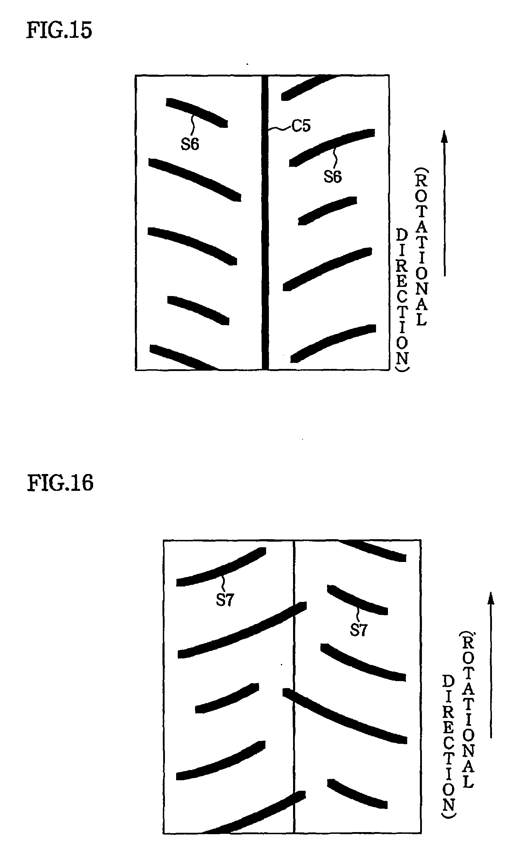

The same front tire as that used in the example 3 was used as a sample tire, with the exception that the type shown in Fig. 15 was used for a pattern on the tread surface portion in the tread 22. In the tread pattern shown in Fig. 15, a main groove component C5 exists, and there are provided tilting main grooves S6, which form inverted truncated chevron shapes as viewed from the rear side of the rotational direction of the tire. The area ratio of all grooves in a pattern on the tread surface portion is substantially the same as that in the example 3.

### EXAMPLE 4

In the pneumatic tire 10 for a two-wheeled motor vehicle, according to the embodiment shown in Fig. 1, a tire in which no angled belts 26B is provided, and in which the spiral belt 26A alone constitutes a belt layer, was used as a front tire. The tire size, the carcass plies, the bead fillers are the same as those in the example 3.

The spiral belt 26A was formed by spirally winding one long length of rubber-coated cord made of aramid fibers (Kevlar™ made by du Pont Corp.; twisted structure: 1670d/2; initial tensile resistance: 736 cN/cord) obtained by coating the cord with rubber. The driving count was 30 cords/25 mm.

As a pattern on the tread surface portion in the tread 22, the type shown in Fig. 10 was used. Specifically, there are provided tilting main grooves A2, tilting main grooves B2, and a main groove component C2. The tilting main groove A2 is arranged to extend from the tread center region to the shoulder regions in the direction from upstream to downstream, at an angle of 60° on the acute angle side, with respect to the circumferential direction. The tilting main groove B2 is arranged to extend from downstream to upstream stream, at an angle of 60° on the acute angle side, with respect to the circumferential direction. Also, the main groove component C2 is formed by inflecting the tilting main grooves B2 so as to have an angle of substantially 0° with respect to the circumferential direction, in the tread center region. The total groove length of the main groove component C2 is 25% of the circumferential length of the tread center portion, in a no-load standard state where the tire is assembled to a standard rim specified in the JATMA standards and filled with 80% of the highest internal pressure in accordance with the tire standards.

In the tilting main grooves A2 and the tilting main grooves B2, right and left pattern elements (a pattern: with 15 pitches in all) are mutually offset with respect to the tread center. The offset amount is one-half one pitch length of the pattern. The pitch of the tilting main grooves A2 and the tilting main grooves B2 is one-fifteenth the entire circumferential length. In a no-load standard state where the tire is assembled to a standard rim specified in the JATMA standards and filled with 80% of the highest internal pressure in accordance with the tire standards, the groove width of each of the tilting main groove A2 and the tilting main groove B2 is 3% of the periphery length between the opposite edges of the tread. Also, the groove length of each of the tilting main groove A1 and the tilting main groove B1 is 40% of the periphery length between the opposite edges of the tread. Furthermore, the allocation of the groove length and the groove area between the tilting main grooves A2 and B2 satisfies the relationship represented by the following expressions:
(a) allocation of the groove length: B:A = 10:10;
(b) allocation of the groove area: B:A = 10:10.

Moreover, in a no-load standard state which the tire is assembled to a standard rim specified in the JATMA standards and filled with 80% of the highest internal pressure in accordance with the tire standard, the area ratio of all grooves in a pattern on the tread surface portion is 12%.

### EXAMPLE 5

In the pneumatic tire 10 for a two-wheeled motor vehicle, according to the embodiment shown in Fig. 1, a tire in which no angled belts 26B is provided, and in which the spiral belt 26A alone constitutes a belt layer, was used as a front tire. The tire size, the carcass plies, the bead fillers are the same as those in the example 3.

The spiral belt 26A was formed by spirally winding one long length of rubber-coated cord made of aramid fibers (Kevlar™ made by du Pont Corp.; twisted structure: 1670d/2; initial tensile resistance: 736 cN/cord) obtained by coating the cord with rubber. The driving count was 30 cords/25 mm.

As a pattern on the tread surface portion in the tread 22, the type shown in Fig. 11 was used. Specifically, there are provided tilting main grooves A3, tilting main grooves B3, and main groove component C3. The tilting main groove A3 is arranged to extend from the tread center region to the shoulder regions in the direction from upstream to downstream, at an angle of 60° on the acute angle side, with respect to the circumferential direction. The tilting main groove B3 is arranged to extend from downstream to upstream stream, at an angle of 60° on the acute angle side, with respect to the circumferential direction. Also, the main groove component C3 is formed by inflecting the tilting main grooves B3 so as to have an angle of substantially 0° with respect to the circumferential direction, in the tread center region. The total groove length of the main groove component C3 is 58% of the circumferential length of the tread center portion, in a no-load standard state where the tire is assembled to a standard rim specified in the JATMA standards and filled with 80% of the highest internal pressure in accordance with the tire standards.

In the tilting main grooves A3 and the tilting main grooves B3, right and left pattern elements (a pattern: with 15 pitches in all) are mutually offset with respect to the tread center. The offset amount is one-half one pitch length of the pattern. The pitch of each of the tilting main grooves A3 and the tilting main grooves B3 is one-fifteenth the entire circumferential length. In a no-load standard state where the tire is assembled to a standard rim specified in the JATMA standards and filled with 80% of the highest internal pressure in accordance with the tire standards, the groove width of each of the tilting main groove A3 and the tilting main groove B3 is 3% of the periphery length between the opposite edges of the tread. Also, the groove length of each of the tilting main groove A3 and the tilting main groove B3 is 40% of the periphery length between the opposite edges of the tread. Furthermore, the allocation of the groove length and the groove area between the tilting main grooves A3 and B3 satisfies the relationship represented by the following expressions:
(a) allocation of the groove length: B:A = 10:10;
(b) allocation of the groove area: B:A = 10:10.

Moreover, in a no-load standard state which the tire is assembled to a standard rim specified in the JATMA standards and filled with 80% of the highest internal pressure in accordance with the tire standard, the area ratio of all grooves in a pattern on the tread surface portion is 12%.

### CONVENTIONAL EXAMPLE 5

The same front tire as that used in the example 4 was used as a sample tire, with the exception that the type shown in Fig. 16 was used for a pattern on the tread surface portion in the tread 22. In the tread pattern shown in Fig. 16, no main groove component C exists, and there are provided tilting main grooves S7, which form truncated chevron shapes as viewed from the rear side of a rotational direction of the tire. The area ratio of all grooves in a pattern on the tread surface portion is substantially the same as that in the example 4.

With each of these tires mounted to a vehicle as a respective one of the front tires, a conventional tire having a size of MCR190/50ZR17 was mounted as a rear tire in each case, and running tests were performed. The results are shown in Tables 10 and 11. Based on the feeling evaluations by drivers, the test results were represented as indices, taking the results in the conventional example 3 as 100, with respect to the conventional example 4 and the example 3; and taking the results in the conventional example 5 as 100, with respect to the examples 4 and 5. Larger the numeral value, the better the result.

The size of the rim of the front tire used for the running tests was MT3.50 × 17, and the size of the rim of the rear tire used then was MT6.00 × 17. The air pressure of each of the front and rear tires was 250 kPa.

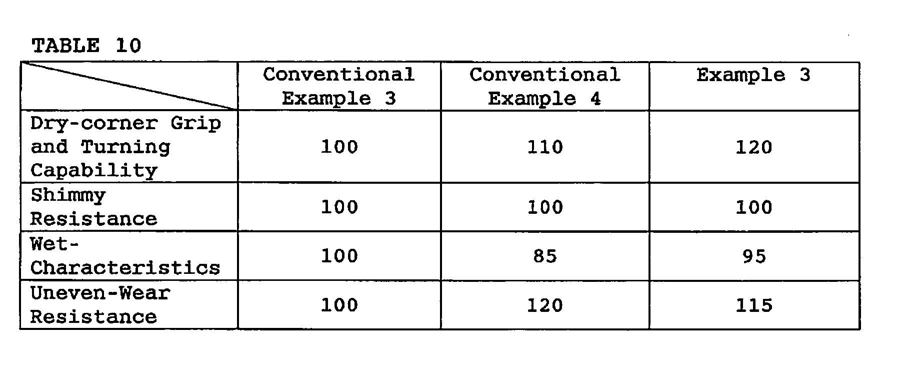

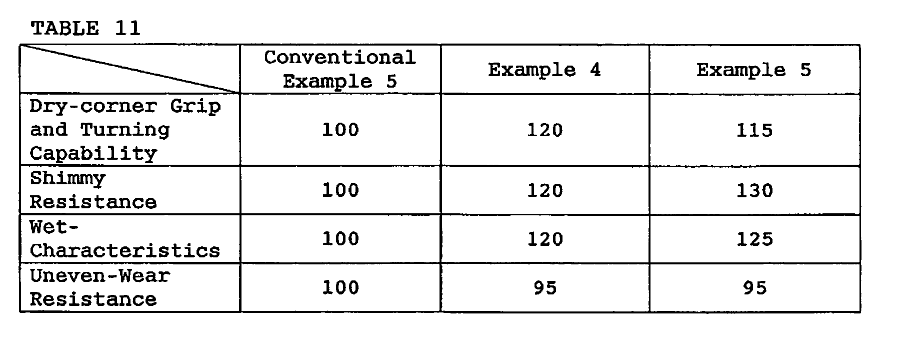

From the results in Tables 10 and 11, it was ascertained that, in the examples 3 to 5, the performance is balancedly improved in all aspects as compared with that in the conventional examples 3 to 5, although it is a little inferior in "wet characteristics".

### Industrial Applicability

As described above, in the combination in which pneumatic tires for a two-wheeled motor vehicle having a radial carcass structure are mounted to both of the front and rear wheels, mounting a pneumatic tire for a two-wheeled motor vehicle according to the present first invention to at least one of the front and rear wheels makes it possible to improve the kinematical performance including the turning capability at a corner, grip limit, overall settling of vibrations of a vehicle body, slip-control performance, and capability of absorbing unevenness of a road surface, and to enhance steering stability, by making use of the respective advantageous characteristics of the spiral belt and the angled belt.

Furthermore, in the combination in which pneumatic tires for a two-wheeled motor vehicle having a radial carcass structure are mounted to both of the front and rear wheels, mounting a pneumatic tire for a two-wheeled motor vehicle according to the present second invention to at least one of the front and rear wheels, allows the uneven-wear resistance, capability of absorbing unevenness of a road surface, "wet characteristics", steering stability, and shimmy resistance to be optimized.

## Claims

1. A pneumatic tire for a two-wheeled motor vehicle, which comprises:
bead cores embedded in a pair of right and left bead portions;
a carcass toroidally extended from one bead portion to the other, the opposite end portions thereof being wound around the respective bead cores and locked in the respective bead portions;
a belt layer disposed radially on the outside of a crown portion of the carcass; and
a tread portion disposed radially on the outside of the belt layer,
wherein the belt layer includes a spiral belt where the direction of cords thereof is substantially a circumferential direction of the tire, and at least one angled belt that is disposed on at least an outer layer of the spiral belt and whose cords have an angle with respect to an equatorial plane of the tire; and
wherein the tread surface portion of the tread of the tire includes, at least in a tread center region, a main groove component having an angle in the range of 0° or more to less than 20° with respect to the circumferential direction.

2. The pneumatic tire for a two-wheeled motor vehicle according to Claim 1, wherein, in a no-load standard state where the tire is assembled to a standard rim specified in standards and filled with 80% of the highest internal pressure in accordance with the tire standards, the center of the groove width of the main groove component is positioned in the region whose opposite edges are each apart from the tread center portion by substantially 10% of the periphery length between the opposite edges of the tread.

3. The pneumatic tire for a two-wheeled motor vehicle according to Claim 1, wherein, in a no-load standard state where the tire is assembled to a standard rim specified in the standards and filled with 80% of the highest internal pressure in accordance with the tire standards, the total groove length of the main groove component is not less than 50% of the circumferential length of the tread center portion.

4. The pneumatic tire for a two-wheeled motor vehicle according to Claim 1, wherein, in a no-load standard state where the tire is assembled to a standard rim specified in the standards and filled with 80% of the highest internal pressure in accordance with the tire standards, the groove width of the main groove component is in the range of 1.5% to 7.5%, both inclusive, of the periphery length between the opposite edges of the tread.

5. The pneumatic tire for a two-wheeled motor vehicle according to Claim 1, wherein the cords constituting the spiral belt and the cords constituting the angled belt each have an initial tensile resistance of not less than 50 cN/cord.

6. The pneumatic tire for a two-wheeled motor vehicle according to Claim 1, wherein the code angle of the angled belt is in the range of 80° to 20°, both inclusive, with respect to the equatorial plane of the tire.

7. The pneumatic tire for a two-wheeled motor vehicle according to Claim 1, wherein the total width of the angled belt is in the range of 150% to 70%, both inclusive, of the tread width.

8. A pneumatic tire for a two-wheeled motor vehicle, which comprises:
bead cores embedded in a pair of right and left bead portions;
a carcass toroidally extended from one bead portion to the other, the opposite end portions thereof being wound around the respective bead cores and locked in the respective bead portions;
a belt layer disposed radially on the outside of a crown portion of the carcass; and
a tread portion disposed radially on the outside of the belt layer,
wherein the belt layer comprises a spiral belt where the direction of cords thereof is substantially a circumferential direction of the tire, and/or an angled belt whose cords have an angle with respect to an equatorial plane of the tire; and
wherein the tread surface portion of the tread includes a tilting main groove A that extends from a tread center region to shoulder regions in the direction from upstream to downstream, at an angle on the acute angle side, in the range of 45° or more to less than 75° with respect to the circumferential direction; a tilting main groove B that extends from downstream to upstream, at an angle on the acute angle side, in the same range with respect to the circumferential direction; and a main groove component C having an angle in the range of 0° or more to less than 20° with respect to the circumferential direction, in the tread center region.

9. The pneumatic tire for a two-wheeled motor vehicle according to Claim 8, wherein, in a no-load standard state where the tire is assembled to a standard rim specified in standards and filled with 80% of the highest internal pressure in accordance with the tire standards, the groove width of each of the tilting main groove A and the tilting main groove B is in the range of 1.5% to 7.5%, both inclusive, of the periphery length between the opposite edges of the tread, and wherein the groove length of each of the tilting main groove A and the tilting main groove B is not less than 20% of the periphery length between the opposite edges of the tread.

10. The pneumatic tire for a two-wheeled motor vehicle according to Claim 8, wherein the allocation of the groove length and the groove area between the tilting main grooves A and B satisfies the relationship represented by the following expressions:
(a) the allocation of the groove length: B:A = 10:10 to 25;
(b) the allocation of the groove area: B:A = 10:10 to 25.

11. The pneumatic tire for a two-wheeled motor vehicle according to Claim 8, wherein, in a no-load standard state where the tire is assembled to a standard rim specified in the standards and filled with 80% of the highest internal pressure in accordance with the tire standards, the center of the groove width of the main groove component C is positioned in the region whose opposite edges are each apart from the tread center portion by substantially 10% of the periphery length between the opposite edges of the tread.

12. The pneumatic tire for a two-wheeled motor vehicle according to Claim 8, wherein, in a no-load standard state where the tire is assembled to a standard rim specified in the standards and filled with 80% of the highest internal pressure in accordance with the tire standards, the total groove length of the main groove component C is not less than 15% of the periphery length of the tread center portion.

13. The pneumatic tire for a two-wheeled motor vehicle according to Claim 12, wherein, when the belt layer has at least one angled belt on the outer layer of the spiral belt, the total groove length of the main groove component C is not less than 50% of the periphery length of the tread center portion, in a no-load standard state where the tire is assembled to a standard rim specified in the standards and filled with 80% of the highest internal pressure in accordance with the tire standards.

14. The pneumatic tire for a two-wheeled motor vehicle according to Claim 8, wherein the main groove component C is formed by inflecting at least one of the tilting main groove A and the tilting main groove B so as to have an angle in the range of 0° or more to less than 20° with respect to the circumferential direction, in the tread center region.

15. The pneumatic tire for a two-wheeled motor vehicle according to Claim 8, wherein the main groove component C is a groove other than the tilting main groove A and the tilting main groove B, and wherein the main groove component C is at least one linear groove or zigzag groove in the circumferential direction, disposed in the tread center region.

16. The pneumatic tire for a two-wheeled motor vehicle according to Claim 8, wherein, in a no-load standard state which the tire is assembled to a standard rim specified in the standards and filled with 80% of the highest internal pressure in accordance with the tire standard, the area ratio of all grooves in a pattern on the tread surface portion is in the range of 5% to 20%, both inclusive.

17. The pneumatic tire for a two-wheeled motor vehicle according to Claim 8, wherein the cords constituting the spiral belt and the cords constituting the angled belt each have an initial tensile resistance of not less than 50 cN/cord.
